# EUROPEAN PATENT SPECIFICATION

(11) **EP 0 354 737 B1**
(45) Date of publication and mention of the grant of the patent: **17.03.1993**
(21) Application number: 89307954.1
(22) Date of filing: 04.08.1989
(51) Int. Cl.: A47C 31/02, A47C 7/18

(54) **Contoured foam article and method of making contoured foam articles**
Profilierter Gegenstand aus Schaumkunststoff und Verfahren zu seiner Herstellung
Article profilé en mousse synthétique et procédé pour sa fabrication

(30) Priority: 10.08.1988 US 230496
(43) Date of publication of application: 14.02.1990
(73) Proprietor: HOOVER UNIVERSAL, INC., Ann Arbor Michigan 48104 (US)
(72) Inventor: Selbert, Alan Joseph, Tecumseh Michigan 49286 (US); Glaspie, Robert, Saline Michigan 48176 (US); Witzke, Duane William, Adrian Michigan 49221 (US)
(74) Representative: Senior, Alan Murray

(56) References cited:
- DE-A- 2 644 592
- FR-A- 2 534 793
- FR-A- 2 535 184
- US-A- 3 320 108
- US-A- 4 634 486

## Description

### BACKGROUND OF THE INVENTION

This invention relates to contoured foam cushions used in manufacturing seats and a method for making the same. Various methods have been used to construct contoured foam cushions particularly in the field of automobile seating. One such method to form the contoured recesses in a cushion recesses in a cushion has been to sew the cover material to a backing material, compressing the foam therebetween, thereby forming the contour. This procedure allows for the use of relatively inexpensive flat foam stock but requires a sewing operation that is time consuming and labor intensive, adding to the manufacturing cost.

In another method the cover member is first formed or shaped to a predetermined shape and then a performed foam pad is glued to the shaped cover member. This process requires the use of preshaped foam pads which are more expensive than flat foam stock. In yet another method of making a contoured seat cushion a foam pad is molded in plate on a shaped cover member utilizing a pour-in-place process in which an expandable liquid foam material is poured over the shape cover member. This process requires foam molding equipment which again is more expensive than flat foam stock.

Accordingly, it is an object of this invention to provide a contoured foam cushion for use in a seat which is less costly to produce than previous contoured foam cushions. It is a feature of this invention to produce a contoured foam cushion for use in a seat which utilises relatively inexpensive flat foam stock.

US-A-3 320 108 shows a contoured foam seat cushion and a method of making such a seat cushion in accordance with the prior art portions of claims 1 and 3 respectively. In this prior art seat cushion, the backing material comprises an open-mesh fabric which is bonded to the foam material simply to act as a retainer for the shaped compressed foam material, adhesive bonding the open fabric backing material through the foam material to the cover member. This prior art method is intended to provide relatively thin shaped cushion elements for upholstery purposes.

The present invention, as defined in claims 1 and 3, instead of utilising an open fabric backing material, has a further foam pad since the inventors have appreciated that sufficient compression can be provided through such a foam pad as to enable appropriate shaping to be obtained of the first foam pad by the cover sheet being pushed therethrough to engage the adhesive. This provides a substantially dimensioned seat cushion which is particularly suitable for use in a vehicle with only the surface portion provided by the one foam cushion needing to be shaped whilst supported by the second cushion later illustrated as being more substantial than the first cushion.

The contoured foam cushion as later described in greater detail consists of a cover or upholstery member attached to one face of a foam pad and an adhesive layer applied to the opposite face of the foam pad. A second foam pad is then attached to the first pad by this adhesive layer. The two pads are then placed in a press having a number of extending ribs. When the press is operated, these ribs will apply pressure to portions of the cover member compressing the first foam pad until portions of the cover member contact the adhesive layer. After the adhesive has cured, the foam pad is removed from the press and the adhesive holds the cover member in the contoured position. Such a procedure allows the use of relatively inexpensive flat foam stock without a labour intensive sewing operation to contour the seat cushion. Additional advantages and features of the invention will become apparent from the subsequent description and the appended claims taken in conjunction with the accompanying drawings.

### BRIEF DESCRIPTION OF THE DRAWINGS

Figure 1 is a perspective view of the foam cushion of this embodiment in a partial state of assembly.

Figure 2 is a perspective view of a press used to form contours in the cushion.

Figure 3 is a perspective view of the foam cushion in place in the press prior to shaping the contours.

Figure 4 is a perspective view of the press in operation forming the contours in the foam cushion.

Figure 5 is an enlarged view of a portion of the foam cushion as it is being contoured by the press.

Figure 6 is a perspective view of a completed foam cushion with contours formed according to this embodiment.

### DETAILED DESCRIPTION OF THE DRAWINGS

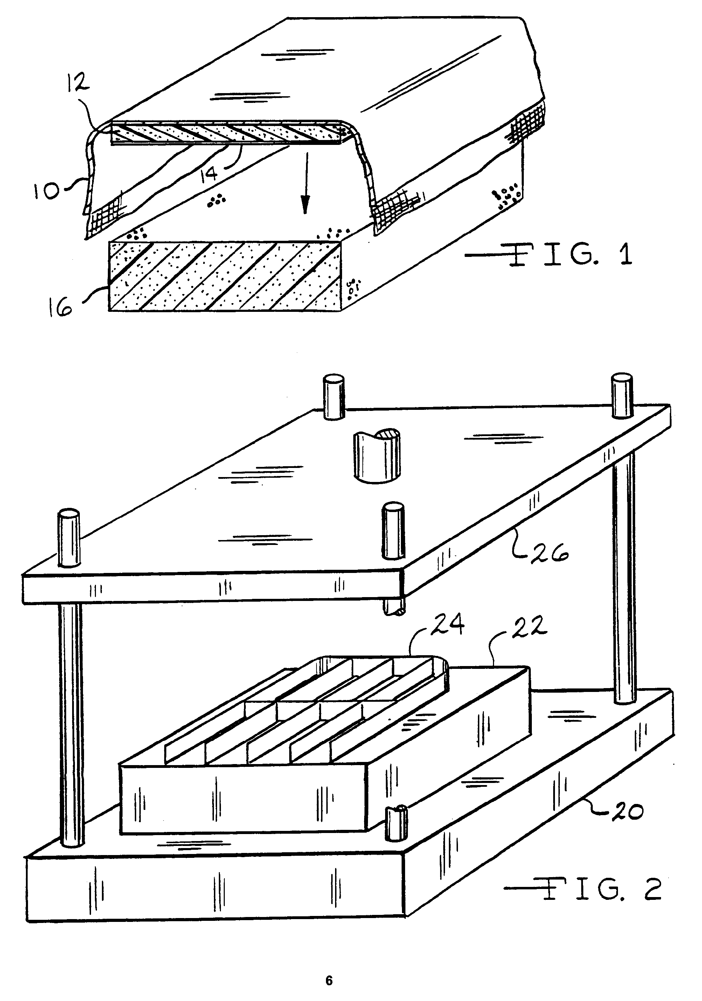

The construction of the contoured cushion of this invention is shown in Figure 1 in a state of partial assembly. A cover member 10 is attached to the upper surface of a foam body 12. The bottom surface of the foam body 12 is attached to the top surface of a second foam pad 16 by adhesive 14. The adhesive 14, which can be either the bottom surface of the body 12 or the top surface of the second foam pad 16, is shown in Figure 1 in the form of a continuous layer adhered to the bottom surface of the body 12. However, it is to be understood that, according to the present invention, the adhesive 14 can be applied selectively to control the areas of adherence and can be in the form of a discontinuous layer which may be preferable in some instances.

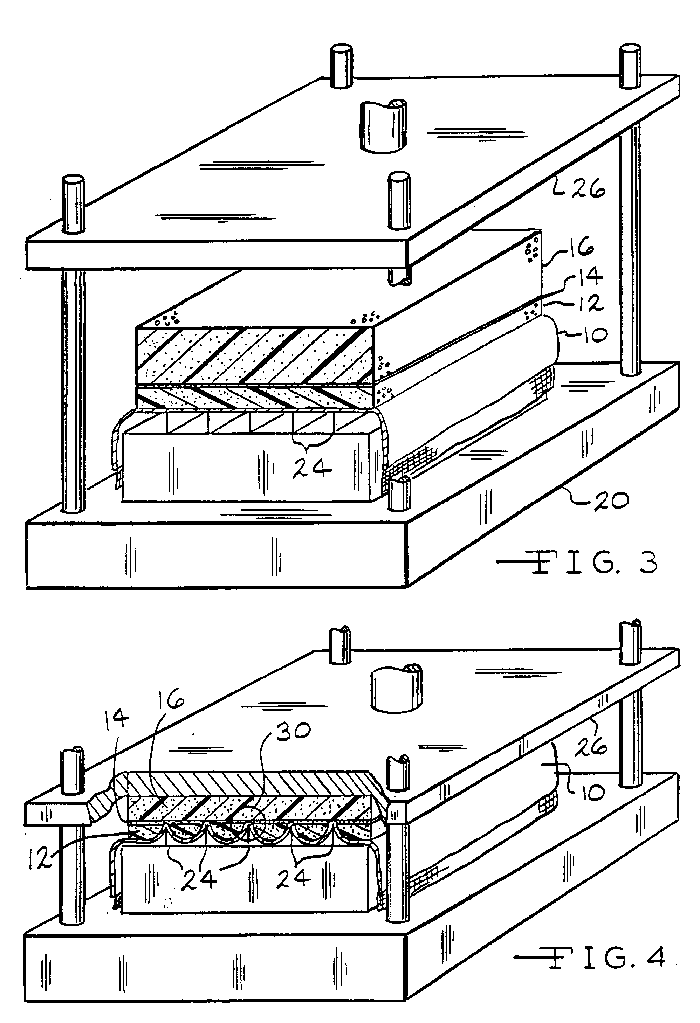

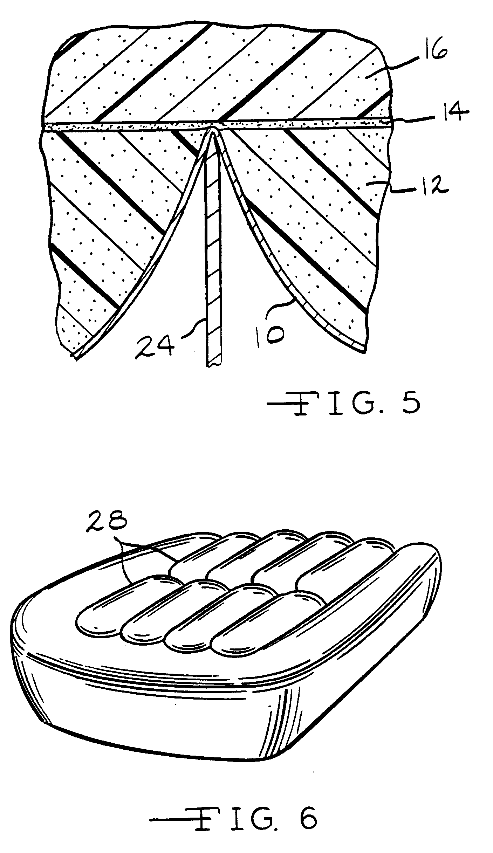

Figure 2 shows the press used to form the contours in the foam cushion. The press includes a base 20 supporting a press tool 22 having a series of upwardly projecting narrow ribs 24. The ribs 24 can be any style or pattern desired and are shown here only as one example for illustration. Figure 3 shows the foam pads in position in the press. The foam pad 12 is placed in the press first with the cover member 10 facing down, contacting the upwardly extending ribs 24. The foam pad 16 is then placed on top of the foam pad 12 with the adhesive 14 between the two pads, thereby bonding pads 12 and 16 together. The press is shown in operation in Figure 4 in which the press plate 26 is moved downward compressing foam pad 16 and pressed foam pad 12 into the spaces between rib members 24.

Figure 5 is an enlarged view of circle 30 of Figure 4. The rib 24 is shown pressing against the cover member 10, compressing a portion of the foam pad 12, such that cover member 10 is in substantially line contact with the adhesive 14. The foam cushion is left in the press until the adhesive has at least partially cured such that when released from the press, the cover member 10 will be retained by the adhesive in the contoured position. Figure 6 shows a completed seat cushion having a contoured top surface constructed according to this invention. Contours 28 are portions of the cover member 10 which are bonded in place. The contours 28 are narrow, substantially line portions of the cover. These line portions, shown here in straight and curved lines, can be of any desired pattern.

## Claims

1. A contoured foam seat cushion comprising:
a) a foam pad member (12) having upper and lower surfaces;
b) backing material (16) having an upper surface disposed in an engaging facing relation with the lower surface of said foam pad (12);
c) adhesive material (14) on one of said engaging facing surfaces operable to secure said pad member (12) and backing material (16) together; and
d) a cover member (10) affixed to the upper surface of said foam pad (12), preselected portions of said cover member (10) being pressed into and through said foam pad (12) into bonding engagement with said adhesive material (14), said adhesive material bonding to said cover member portions so as to retain said portions at substantially the interface between said engaging facing surfaces of said pad member and backing sheet thereby to form contours in said cover member, characterised in that said backing material is comprised by a single second foam pad member (16).

2. A seat cushion according to claim 1, wherein said portions (28) of said cover member (18) pressed into said first foam pad (12) are narrow, substantially line portions.

3. A method of making a seat cushion with a contoured surface wherein the cushion includes a foam pad (12), backing material (16) and a cover member (10) and wherein said foam pad (12) and backing material (16) have upper and lower surfaces and a cover member (10) is fixed to the top surface of said pad (12), said method comprising the steps of:
a) positioning the bottom surface of said foam pad (12) adjacent the top surface of said backing material (16),
b) applying adhesive (14) to one of said adjacent surfaces; and
c) pressing said surfaces into engagement so as to bond said foam pad (12) and backing material (16) together; and
d) simultaneous with said pressing step applying localised pressure to portions of said cover member (10) so as to compress portions of said foam pad (12) directly in line with said cover member portions sufficiently to enable said cover member portion to contact said adhesive thereby enabling said cover member portions to bond to said adhesive at the interface between said pad and backing material so that said cover member portions are retained at said interface thereby forming a contoured cover member, characterised in that said backing material comprises a single second foam pad member (16).

4. A method according to claim 3, wherein said portions (28) of said cover member (10) are narrow, substantially line portions.

## Patentansprüche

1. Profiliertes Schaumstoff-Sitzpolster mit:
a) einem Schaumstoff-Polsterelement (12) mit oberer und unterer Oberfläche;
b) einem Trägermaterial (16) mit einer oberen Oberfläche, die der unteren Oberfläche des Schaumstoffpolsters (12) gegenüberliegt und mit dieser in Eingriff ist;
c) einem auf einer der in Eingriff befindlichen, gegenüberliegenden Oberflächen angebrachten Klebstoffmaterial (14) zur gegenseitigen Befestigung des Polsterelements (12) und des Trägermaterials (16); und
d) einem an der oberen Oberfläche des Schaumstoffpolsters (12) befestigten Überzug (10), wobei ausgewählte Bereiche des Überzugs (10) in und durch das Schaumstoffpolster (12) in Klebeeingriff mit dem Klebstoffmaterial (14) gedrückt sind, wodurch das Klebstoffmaterial diese Bereiche des Überzugs verklebt und diese damit im wesentlichen an der Berührungsfläche der aneinanderliegenden Oberflächen des Polsterelements und des Trägermaterials hält, um so Profilbereiche im Überzug zu bilden,
dadurch gekennzeichnet, daß das Trägermaterial aus einem einzigen zweiten Schaumstoff-Polsterelement (16) besteht.

2. Sitzpolster nach Anspruch 1, wobei die in das erste Schaumstoffpolster (12) gedrückten Bereiche (28) des Überzugs (10) als schmale, im wesentlichen linienförmige Bereiche ausgebildet sind.

3. Verfahren zur Herstellung eines Sitzpolsters mit profilierter Oberfläche, bei dem das Polster ein Schaumstoffpolster (12), ein Trägermaterial (16) und einen Überzug (10) aufweist und bei dem das Schaumstoffpolster (12) und das Trägermaterial (16) jeweils obere und untere Oberflächen aufweisen und ein Überzug (10) an der oberen Oberfläche des Polsters (12) befestigt ist, wobei das Verfahren die folgenden Schritte aufweist:
a) das Schaumstoffpolster (12) wird mit seiner unteren Oberfläche auf die obere Oberfläche des Trägermaterials (16) gelegt,
b) auf eine der aneinanderliegenden Oberflächen wird Klebstoff (14) aufgebracht; und
c) die Oberflächen werden in gegenseitigen Eingriff gepreßt, so daß das Schaumstoffpolster (12) und das Trägermaterial (16) miteinander verbunden werden; und
d) gleichzeitig mit dem Preßschritt wird auf Bereiche des Überzugs (10) ein örtlicher Druck ausgeübt, um diejenigen Bereiche des Schaumstoffpolsters (12), die direkt unter diesen Bereichen des Überzugs liegen, genügend zusammenzudrücken, so daß die Bereiche des Überzugs mit dem Klebstoff in Berührung gelangen und damit mit dem Klebstoff an der Berührungsfläche zwischen dem Polster und dem Trägermaterial verbunden werden können, so daß die Überzugsbereiche an der Berührungsfläche zur Bildung eines profilierten Überzugs gehalten werden, dadurch gekennzeichnet, daß das Trägermaterial ein einziges zweites Schaumstoffpolsterelement (16) aufweist.

4. Verfahren nach Anspruch 3, wobei die Bereiche (28) des Überzugs (10) als schmale, im wesentlichen linienförmige Bereiche ausgebildet sind.

## Revendications

1. Coussin de siège en mousse, adapté à la morphologie, qui comporte :
a) un matelas de mousse (12), ayant des faces supérieure et inférieure;
b) un matériau support (16), dont la face supérieure est placée en vis-à-vis et au contact de la face inférieure dudit matelas de mousse (12);
c) un matériau adhésif (14), sur l'une desdites surfaces en vis-à-vis et en contact, utilisé pour fixer ensemble ledit matelas (12) et ledit matériau support (16); et
d) un élément recouvrant (10), fixé à la face supérieure dudit matelas de mousse (12), des parties prédéterminées dudit élément recouvrant (10) étant comprimées pour traverser ledit matelas de mousse (12) afin de venir en contact et se lier avec ledit matériau adhésif (14), ledit matériau adhésif se collant auxdites parties de l'élément recouvrant, de façon à retenir lesdites parties sensiblement au niveau de l'interface entre lesdites surfaces en vis-à-vis et en contact dudit matelas et de la feuille support, pour former ainsi des contours adaptés à la morphologie dans ledit élément recouvrant,
caractérisé en ce que le matériau support est fait d'un seul second matelas en mousse (16).

2. Coussin de siège selon la revendication 1, dans lequel lesdites parties (28) dudit élément recouvrant (18), comprimées dans ledit premier matelas en mousse (12), sont des parties étroites, sensiblement linéaires.

3. Procédé pour fabriquer un coussin de siège avec une surface adaptée à la morphologie, dans lequel le coussin inclut un matelas en mousse (12), un matériau support (16), et un élément recouvrant (10), et dans lequel ledit matelas en mousse (12) et le matériau support (16) ont des faces supérieure et inférieure, et l'élément recouvrant (10) est fixé à la surface supérieure dudit matelas (12), ledit procédé comportant les étapes de :
a) mise en place de la surface inférieure dudit matelas en mousse (12) à proximité de la surface supérieure dudit matériau support (16),
b) application d'un adhésif (14) à l'une des surfaces adjacentes, et
c) compression desdites surfaces pour qu'elles viennent en contact de façon à coller ensemble ledit matelas en mousse (12) et le matériau support (16), et
d) simultanément à ladite étape de compression, application d'une pression localisée à des parties dudit élément recouvrant (10), de façon à comprimer suffisamment des parties dudit matelas en mousse (12) directement alignées avec lesdites parties de l'élément recouvrant pour permettre que lesdites parties de l'élément recouvrant viennent en contact avec ledit adhésif, permettant ainsi de lier lesdites parties de l'élément recouvrant audit adhésif au niveau de l'interface entre ledit matelas et le matériau support, si bien que lesdites parties de l'élément recouvrant sont retenues au niveau de ladite interface, formant ainsi un élément recouvrant adapté à la morphologie,
caractérisé en ce que ledit matériau support consiste en un seul second matelas en mousse (16).

4. Procédé selon la revendication 3, dans lequel lesdites parties (28) dudit élément recouvrant (10) sont des parties étroites, sensiblement +linéaires.
